# EUROPEAN PATENT APPLICATION

(11) **EP 1 076 448 A1**
(43) Date of publication of application: **14.02.2001**
(21) Application number: 00116136.3
(22) Date of filing: 31.07.2000
(51) Int. Cl.: H04N 1/00

(54) **A facsimile apparatus having a power management feature and control method**

(30) Priority: 10.08.1999 JP 22640899
(71) Applicant: Ricoh Company, Ltd., Tokyo 143-8555 (JP)
(72) Inventor: Tanaka, Masanori, Zama-shi, Kanagawa-ken (JP)
(74) Representative: Schwabe - Sandmair - Marx

(57) **Abstract**

A facsimile apparatus having a power-saving mode in which supplying electric power to devices in the apparatus is shut off or reduced when the apparatus has not been in operation for a predetermined period includes a fixing device having a heater to fix an output image onto an output sheet. The apparatus also includes a monitoring device to monitor and detect a trigger signal that triggers the apparatus to retune from the power-saving mode to a normal operating mode. The apparatus further includes a power control device to shut or reduce the passage of electric current through the heater during a period between a detection of a trigger signal by the monitoring device and a starting of an image outputting operation.

## Description

The present invention relates to facsimile terminal equipment and more particularly to a facsimile apparatus having a power management feature and to a method for controlling a facsimile apparatus.

Facsimile terminal equipment having an image outputting device provided with a heater for fixing output images is known. Such facsimile terminal equipment hitherto sometimes provides a power-saving mode in which relatively large power consuming devices, such as the above-described heater is cut off from electric power. That is, when the facsimile terminal equipment is not under an operating state for a predetermined-period, the facsimile terminal equipment turns to the power-saving mode, and when the facsimile terminal equipment receives a facsimile signal or starts an image scanning operation of a transmitting document, the facsimile terminal equipment returns to a normal operating mode and turns the heater on again for preparing an image outputting operation. Thus, the power consumption of the power consuming devices including the heater is saved in the power-saving mode.

However, the facsimile terminal equipment of the above-described background art turns the heater on again almost immediately after the equipment returns to the normal operating mode from the power-saving mode. Consequently, the facsimile terminal equipment of the background art still consumes a certain amount of power in a period from the beginning of the normal operating mode (i.e., the end of the power-saving mode) to a beginning of an actual image outputting operation.

The present invention has been made in view of the above-discussed and other problems and to overcome the above-discussed and other problems associated with the background methods and apparatus. Accordingly, an object of the present invention is to provide a novel facsimile apparatus having a power management feature that can save power consumption.

To achieve these and other objects, the present invention provides a novel facsimile apparatus having a power-saving mode in which the supply of electric power to devices in the apparatus is shut off or reduced when the apparatus has not been in operation for a predetermined period includes a fixing device having a heater to fix an output image onto an output sheet. The apparatus also includes a monitoring device to monitor and detect a trigger signal that triggers the apparatus to return from the power-saving mode to a normal operating mode. The apparatus further includes a power control device to shut off and/or reduce the passage of electric current through the heater during a period of time between the detection of a trigger signal by the monitoring device and the starting of an image outputting operation.

A more complete appreciation of the present invention and many of the attendant advantages thereof will be readily obtained as the same becomes better understood by reference to the following detailed description of an exemplary, preferred embodiment when considered in connection with the accompanying drawings, wherein:
FIG. 1 is a block diagram illustrating an exemplary facsimile apparatus configured according to the present invention;
FIG. 2 is a flowchart illustrating exemplary operational steps configured according to the present invention when the facsimile apparatus of FIG. 1 returns from a power-saving mode to a normal operating mode;
FIG. 3 is a flowchart illustrating another exemplary operational steps configured according to the present invention when the facsimile apparatus of FIG. 1 returns from the power-saving mode to the normal operating mode; and
FIG. 4A and FIG. 4B are a flowchart illustrating further exemplary operational steps configured according to the present invention when the facsimile apparatus of FIG. 1 returns from the power-saving mode to the normal operating mode.

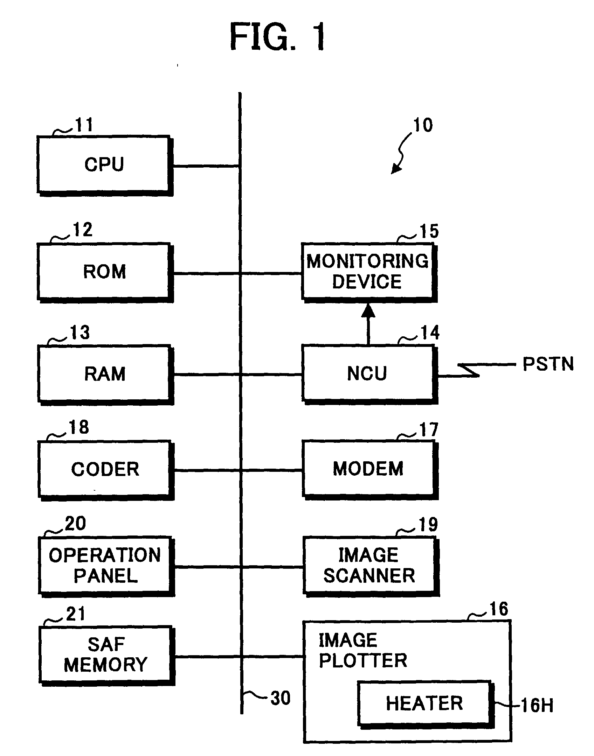

Throughout the drawings like reference numerals designate identical or corresponding parts. FIG. 1 is a block diagram illustrating an exemplary facsimile apparatus 10 configured according to the present invention. The facsimile apparatus 10 includes a central processing unit (CPU) 11, a read-only memory (ROM) 12, a random access memory (RAM) 13, a network control unit (NCU) 14, and a monitoring device 15. The facsimile apparatus 10 also includes an image plotter or printer 16, a modem 17, a coder 18, an image scanner 19, an operation panel 20, and a store- and -forward memory (SAF memory) 21. All the elements are interconnected through a bus 30.

The CPU 11 controls the other devices in the facsimile apparatus 10 according to programs or instruction codes stored in the ROM 12 to perform a predetermined facsimile operation. The RAM 13 stores various data such as control parameters for driving devices and elements in the facsimile apparatus 10, management data, temporary data required for program execution by the CPU 11, etc. At least a part of the RAM 13 preferably has a backup battery for storing data therein in a non-volatile manner. A part of the RAM 13 may also be structured by a non-volatile memory such as a flash memory, EEPROM, etc.

The network control unit (NCU) 14 is connected to a public switched telephone network (PSTN) as illustrated in FIG. 1. The network control device 14 performs transmitting and receiving operations according to a predetermined protocol, such as an establishing operation of a linkage, a transmitting operation of a call number as a selection signal, a detecting operation of an incoming call, etc. The monitoring device 15 monitors a trigger signal to return to a normal operating mode from a power-saving mode, which is described later. For example, when the monitoring device 15 detects notification of an incoming call, the monitoring device 15 informs the CPU 11 of the detection of the incoming call as a trigger signal for returning to the normal operating mode.

The image plotter or printer 16 serving as an image outputting device includes a photoconductive member, an electric charging device, an exposure device, and a developing device. The electric charging device charges the photoconductive member at a substantially uniform voltage. The exposure device irradiates the charged surface of the photoconductive member with light, such as a raster scanning light beam, according to a received facsimile image signal. □Thus, an electrostatic latent image is formed on the surface of the photoconductive member. The developing device develops the latent image with toner, and thus a toner image is formed on the photoconductive member.

The image plotter or printer 16 also includes a paper feed device, an image transfer device, and an image fixing device. The image transfer device transfers the formed toner image from the surface of the photoconductive member onto a sheet of paper fed from the paper feed device. The paper carrying the toner image is then transported to the image fixing device. The image fixing device includes a heater 16H and fixes the toner image with heat generated by the heater 16H onto the sheet of paper. The image fixing device then discharges the sheet carrying the fixed toner image outside the facsimile apparatus 10 as a received facsimile image.

The modem 17 modulates image information into a modulated signal and transmits the modulated signal accompanying control signals according to a transmission control protocol to a receiving facsimile terminal via the network control unit (NCU) 14 and the public switched telephone network (PSTN). The modem 17 also demodulates a modulated signal received through the network control unit (NCU) 14 into demodulated image information.

The coder 18 encodes image information of a document, which is read by the image scanner 19 and which is to be sent, into compressed image information. The coder 18 also decodes received compressed image information into decompressed image information. The coder 18 may also be referred as an encoding and decoding device.

The image scanner 19 scans a document to be sent and generates digital image information. The operation panel 20 displays a status of the facsimile apparatus 10, operation guidance, etc., and inputs instructions to operate the facsimile apparatus 10.

The SAF memory 21 stores image information, which is generated by the image scanner 19 and compressed by the coder 18. The SAF memory 21 also stores compressed image information received by the network control unit (NCU) 14. Further, when the facsimile apparatus 10 receives compressed image information, the coder 18 expands the compressed image information into decompressed or expanded image information for outputting the image thereof by the image plotter or printer 16, and the SAF memory 21 temporally stores such expanded information as well.

The facsimile apparatus 10 provides a power-saving mode in which electric power supplied to devices not being in operation, such as the heater 16H in the image plotter 16, is shut off. When the facsimile apparatus 10 is not in a normal operating mode for a predetermined period of time, the facsimile apparatus 10 changes itself to the power-saving mode from the normal operating mode. On the other hand, as long as the facsimile apparatus 10 is in operation or begins an operation within the predetermined period of time, the facsimile apparatus 10 stays in the normal operating mode. For example, the facsimile apparatus 10 is in or begins a facsimile information receiving operation and an image outputting operation invoked by an incoming call of facsimile communication, a scanning operation of a sending document, transmitting operation of the scanned data, a instruction inputting operation by an operator via the operation panel 20, etc, within the predetermined period, the facsimile apparatus 10 stays in the normal operating mode.

In the power-saving mode, the facsimile apparatus 10 turns off the electric power supplying to devices that are not in operation, such as the heater 16H in the image plotter 16.

The monitoring device 15 monitors or detects the notification of an incoming call, etc., and is informed from the network control unit (NCU) 14. When the monitoring device 15 detects such a notification, the monitoring device 15 informs the CPU 11 of the detection as a trigger signal to return from the power-saving mode to the normal operating mode. After that, the CPU 11 controls the heater 16H in the image plotter or printer 16 to prepare an image outputting operation.

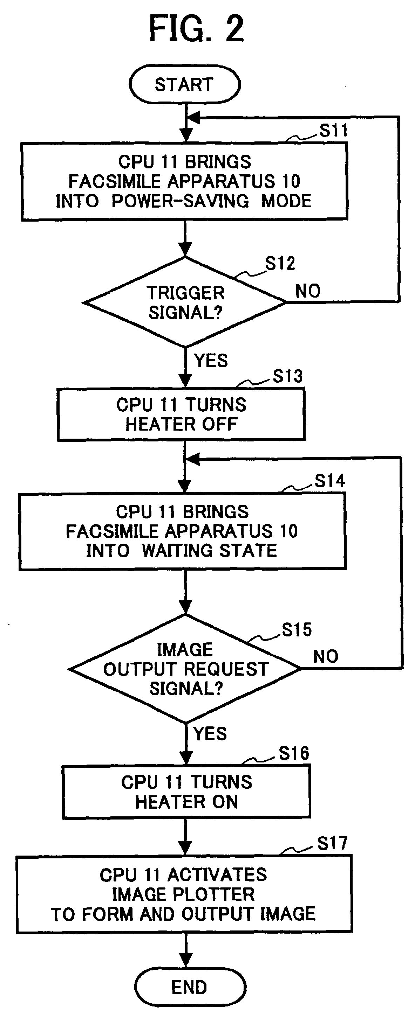

FIG. 2 is a flowchart illustrating operational steps of an exemplary embodiment according to the present invention when the facsimile apparatus 10 of FIG. 1 returns from the power-saving mode to the normal operating mode. The flowchart of FIG. 2 is invoked, when the facsimile apparatus 10 runs in a power-saving mode. Referring to FIG. 2, in step S11, the CPU 11 brings the facsimile apparatus 10 into a power-saving mode including a shutting off operation of electric power of the heater 16H in the image plotter or printer 16. In step S12, the CPU 11 waits for a trigger signal from the monitoring device 15. When the CPU 11 receives a trigger signal, i.e., YES in step S12, the process proceeds to step S13, and when the CPU 11 does not receive a trigger signal, i.e., No in step S12, the process returns to step S11.

In step S13, the CPU 11 turns off the electric power of the heater 16H in the image plotter or printer 16 to make sure. In step S14, the CPU 11 brings the facsimile apparatus 10 into a waiting state that maintains the electric power of the heater 16H in the image plotter 16 shut off. In step S15, the CPU 11 waits for an image output request signal from another program. The image output request signal is generated when received facsimile information, which is compressed data, has been expanded and the expanded information has been stored in the SAF memory 21. When the CPU 11 receives the image output request signal, i.e., YES in step S15, the process proceeds to step S16, and when the CPU 11 does not receive any image output request signal, i.e., No in step S15, the process returns to step S14.

In step S16, the CPU 11 turns on the electric power of the heater 16H in the image plotter 16. In step S17, the CPU 11 activates the image plotter 16 to form and output an image on a sheet according to the expanded received information stored in the SAF memory 21. In the above-described operating steps, the CPU 11 functions as a power control device.

In the above-described example, because the electric power of the heater 16H in the image plotter 16 is kept turned off during the period between the arrival of the trigger signal and the arrival of the image output request signal, the consumption power of the facsimile apparatus 10 during the period between the arrival of the trigger signal and the arrival of the image output request signal is saved.

In the above-described example, the trigger signal is generated based on the notification of an incoming call. However, the trigger signal is not limited to an incoming call. For example, information from a sensor that is disposed in the image scanner 19 and detects documents placed thereon, key input operations to the operation panel 20, supplying operations of sheets of papers into the image plotter 16, opening and closing operations of covers for maintenance of the facsimile apparatus 10, turning on operations of a power switch of the facsimile apparatus 10, etc., may also be a trigger signal.

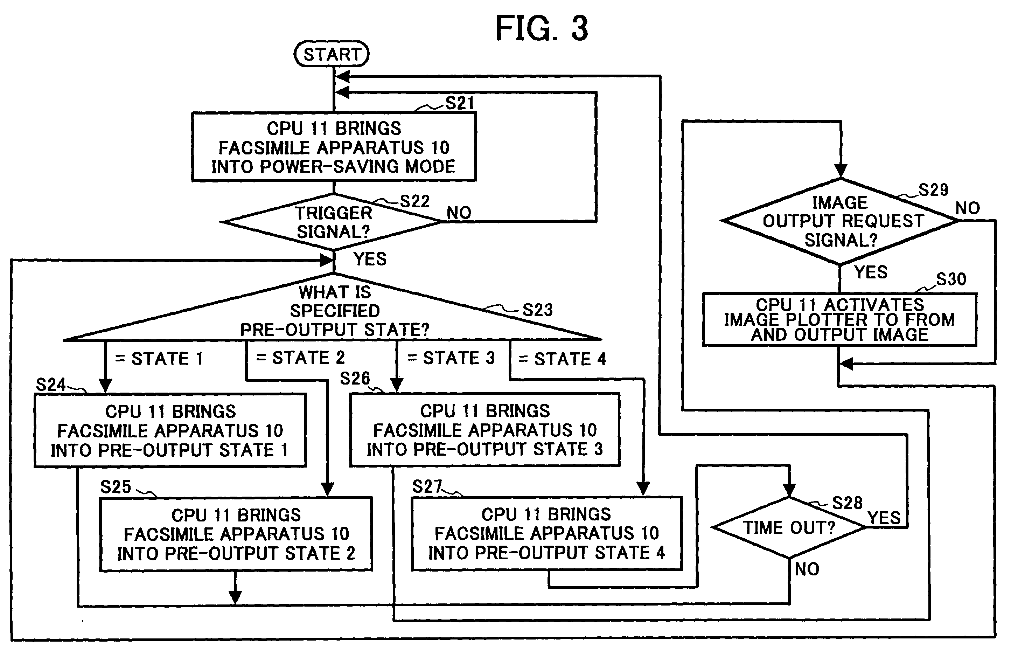

FIG. 3 is a flowchart illustrating operational steps of another exemplary embodiment according to the present invention when the facsimile apparatus 10 of FIG. 1 returns from the power-saving mode to the normal operating mode. In this example, a plurality of preparatory output states (hereinafter pre-output states) of the facsimile apparatus 10 during the period between the trigger signal and the image output request signal are provided, and one of the plural pre-output states is selected according to a specified pre-output state. In this example, the specified pre-output state is stored in the RAM 13 in a non-volatile manner. The user or the service person of the facsimile apparatus 10 can specify and modify the specific pre-output state as one of preference parameters via the operation panel 20. The specific pre-output state can also be downloaded through the network control unit 14 and public switched telephone network (PSTN).

Referring to FIG. 3, in step S21, the CPU 11 brings the facsimile apparatus 10 to the power-saving mode including shutting off operation of electric power of the heater 16H in the image plotter 16 as a result of a not-in-operation state, for example, when no incoming call is received, no key is input to the operation panel 20, etc., in a predetermined period of time. In step S22, the CPU 11 waits for a trigger signal from the monitoring device 15. When the CPU 11 receives a trigger signal, i.e., YES in step S22, the process proceeds to step S23, and when the CPU 11 does not receive a trigger signal, i.e., No in step S22, the process returns to step S21.

In step S23, the CPU 11 checks a specified pre-output state of the facsimile apparatus 10 stored in the RAM 13, and the process branches to one of steps S24, S25, S26 and S27 to bring the facsimile apparatus 10 into the specified pre-output state. In this example, as the plural pre-output states, pre-output state 1, pre-output state 2, pre-output state 3 and pre-output state 4 are provided. Therefore, when the specified state is pre-output state 1, i.e., =STATE 1 in step S23, the process branches to step S24, when the specified state is pre-output state 2, i.e., = STATE 2 in step S23, the process branches to step S25, when the specified state is pre-output state 3, i.e., = STATE 3 in step S23, the process branches to step S26, and when the specified state is pre-output state 4, i.e., = STATE 4 in step S23, the process branches to step S27.

In step S24, the CPU 11 brings the facsimile apparatus 10 into the pre-output state 1, for example, the CPU 11 maintains the heater 16H in the image plotter 16 to be shut off from electric power, so that the temperature of the heater 16H tends to be the same as the temperature of the environment where the facsimile apparatus 10 is installed. In step S25, the CPU 11 brings the facsimile apparatus 10 into the pre-output state 2, for example, the CPU 11 turns on the heater 16H in the image plotter 16 for a predetermined time, and then turns the heater 16H off again.

In step S26, the CPU 11 brings the facsimile apparatus 10 into the pre-output state 3, for example, the CPU 11 controls the temperature of the heater 16H in the image plotter 16 so as to be at a pre-output target temperature. The pre-output target temperature may be stored in the RAM 13. To control the heater 16H at the pre-output target temperature, the CPU 11 repetitively turns on and off the electric power of the heater 16H as necessary.

In step S27, the CPU 11 brings the facsimile apparatus 10 into the pre-output state 4. For example, the CPU 11 turns on the electric power of the heater 16H in the image plotter 16 until the temperature of the heater 16H arrives at a threshold value, and when the temperature of the heater 16H arrives at the threshold value, the CPU 11 turns the heater 16H off. In step S287, the CPU 11 determines whether the facsimile apparatus 10 is controlled to be the pre-output state 4 beyond a predetermined timeout time. In other words, the CPU 11 determines if the elapsed time after the trigger signal has been received exceeds the timeout time wile the facsimile apparatus 10 is in the pre-output state 4. When the elapsed time exceeds the timeout time, i.e., YES in step S28, the process returns to step S21, and when the elapsed time does not exceed the timeout time, i.e., No in step S28, the process proceeds to step S29.

In step S29, the CPU 11 waits for an image output request signal from another program. The image output request signal is generated when facsimile information has been received and expanded or decompressed, and the expanded information has been stored in the SAF memory 21. When the CPU 11 receives the image output request signal, i.e., YES in step S29, the process proceeds to step S30, and when the CPU 11 does not receive an image output request signal, i.e., No in step S29, the process returns to step S23.

The user of the facsimile apparatus 10 can change the specified pre-output state anytime. Therefore, when the process returns to step S23, the CPU 11 checks again the specified pre-output state of the facsimile apparatus 10 stored in the RAM 13, which might have been changed, and the process branches to one of the plural pre-output states according to the specified pre-output state.

In step S30, while the CPU 11 controls the heater 16H in the image plotter 16 at a fixing temperature, the CPU 11 activates the image plotter 16 to form and output an image according to the expanded information stored in the SAF memory 21, and then the process returns to step S23.

In the above-described operating steps, the CPU 11 functions as a power control device. In the above-described example, because the electric power of the heater 16H in the image plotter 16 is controlled according to the specified pre-output state during the period between the arrivals of the trigger signal and the image output request signal, the consumption power of the facsimile apparatus 10 during the period can be saved or reduced.

In the above-described example, four types of pre-output states of the facsimile apparatus 10 are provided. However, the pre-output states are not limited to four types, i.e., the number of types of pre-output states may be reduced and increased. For example, the pre-output target temperature used in the operation practiced in step S26 may be provided with plural values, and the step S26 may be divided into plural methods each for controlling the heater 16H to be at each of the plural pre-output target temperatures.

In the above-described example, the pre-output state is selected according to a single specified pre-output state being stored in the RAM 13 in a non-volatile manner. However, the pre-output state may also be independently selected according to a type of the trigger signal. For example, the pre-output state 1 may be invoked by a trigger signal caused by placing a document on the image scanner 19 to send the document. Likewise, the pre-output state 2 may be invoked by a trigger signal caused by a key input operation, and the pre-output state 3 may be invoked by a trigger signal caused by an incoming call, etc.

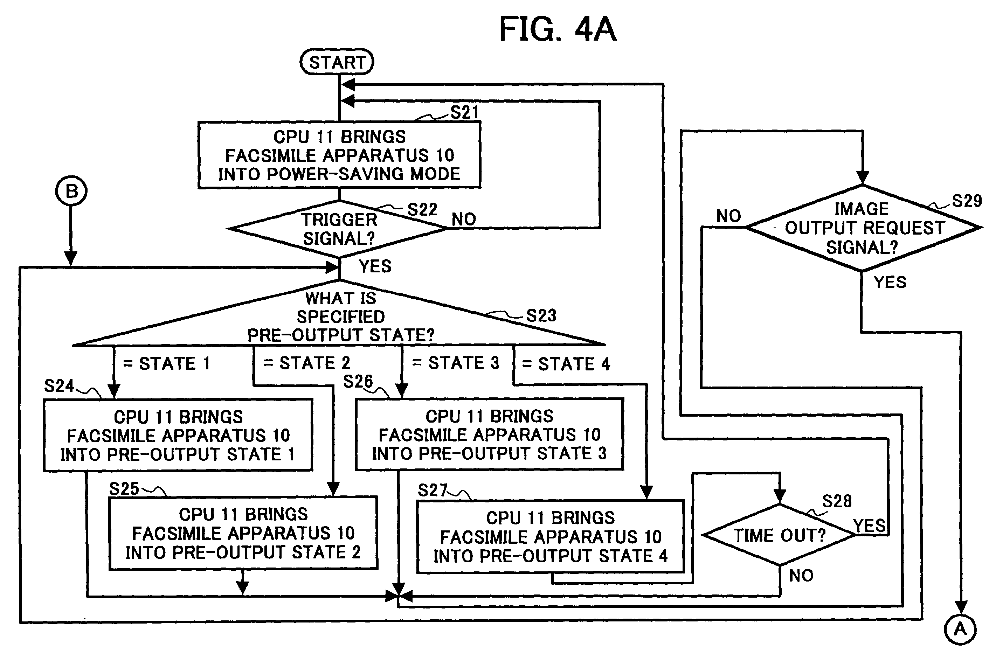

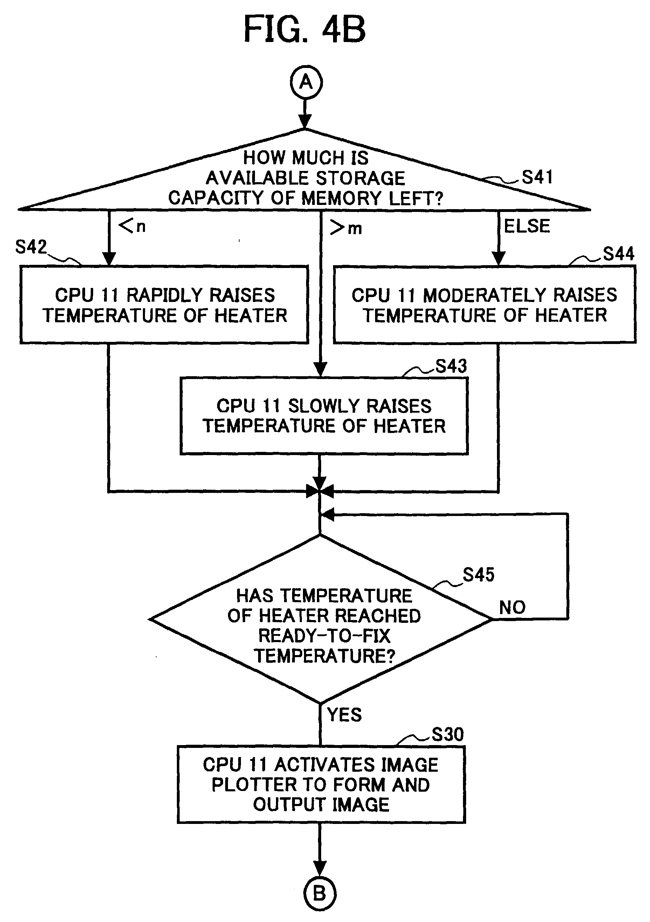

FIG. 4A and FIG. 4B are a flowchart illustrating operational steps of another exemplary embodiment according to the present invention when the facsimile apparatus 10 of FIG. 1 returns from the power-saving mode to the normal operating mode. In this example, a plurality of heating methods of the heater 16H in the image plotter 16 after the image output request signal input are further provided, and one of the plurality of heating methods is selected according to an available storage capacity of the RAM 13. In this example, as the plural heating methods, heating method 1, heating method 2, and heating method 3 are provided.

Referring to 4A and FIG. 4B, the operational steps that are substantially the same as those in FIG. 3 are denoted by the same reference numerals, so that the description of those operational steps is omitted. In step S21 through step S29, the CPU 11 brings the facsimile apparatus 10 into the power-saving mode and the pre-output state, and waits for an image output request signal from another program in substantially the same manners as those practiced in the operational steps of FIG. 3. In step S41, the CPU 11 checks an available storage capacity of the RAM 13, and the process branches to one of steps S42, S43 and S44, in which one of the plural heating methods of the heater 16H is executed according to the available storage capacity of the RAM 13.

When the available storage capacity of the RAM 13 is smaller than a first threshold value n, i.e., <n in step S41, the process branches to step S42, when the available storage capacity is larger than a second threshold value m, i.e., >m in step S41, the process branches to step S43, and when the available storage capacity is ELSE (i.e., the available storage capacity is equal to or larger than the first threshold value n and equal to or smaller than the second threshold value m), the process branches to step S44.

In step S42, the CPU 11 controls the heater 16H by the heating method 1, for example, the CPU 11 rapidly raises the temperature of the heater 16H to a ready-to-fix temperature by the passage of relatively large electric current through the heater 16H. On the contrary, in step S43, the CPU 11 controls the heater 16H by the heating method 2, for example, the CPU 11 slowly raises the temperature of the heater 16H by the passage of relatively small electric current through the heater 16H. In step S44, the CPU 11 controls the heater 16H by the heating method 3, for example, the CPU 11 moderately raises the temperature of the heater 16H by the passage of medium electric current through the heater 16H.

The ready-to-fix temperature may be slightly lower than the fixing temperature. In this example, when the heater 16H reaches the ready-to-fix temperature, the image plotter starts an image exposing operation, and the formed toner image on a sheet of paper arrives at the heater 16H, the heater 16H becomes a proper temperature to fix, i.e., the fixing temperature. Therefore, the ready-to-fix temperature is also referred to as a ready-to-expose temperature.

In step S45, the CPU 11 determines whether the temperature of the heater 16H has reached the ready-to-fix temperature, if YES in step S45, the process proceeds to step S30, and if NO in step S45, the process stays at step S42. In step S30, while the CPU 11 controls the heater 16H in the image plotter 16 at the fixing temperature, the CPU 11 activates the image plotter or printer 16 to form and output an image on a sheet according to the expanded information stored in the SAF memory 21. Then the process returns to step S23.

In the above-described example, the amount of electric current through the heater 16H is changed according to the available storage capacity of the RAM 13; however, the heating methods are not limited to this example. For example, a constant intensity current may be divided into small periods of time, and the number of turn-on periods and the number of turn-off periods may be varied according to the available storage capacity of the RAM 13. In addition, in the above-described example, one of the plural heating methods of the heater 16H is executed according to the available storage capacity of the RAM 13. However, the SAF memory 21 can replace the function of the RAM 13 because addresses of those memories are different, but the functions of those memories can still be substantially the same. That is, one of the plural heating methods of the heater 16H may also be executed according to the available storage capacity of the SAF memory 21.

As described above, the novel facsimile apparatus having a power management feature and method of the present invention can save or reduce power consumption.

Obviously, numerous modifications and variations of the present invention are possible in light of the above teachings. For example, features described for certain embodiments may be combined with other embodiments described herein. It is therefore to be understood that within the scope of the appended claims, the invention may be practiced otherwise than as specifically described herein.

This document is based on Japanese patent application No. 11-226408 filed in the Japanese Patent Office on August 10, 1999, the entire contents of which are incorporated herein by reference.

## Claims

1. A facsimile apparatus having a power-saving mode in which the supply of electric power to devices in the apparatus is shut off and/or reduced when the apparatus has not been in operation for a predetermined period of time, the apparatus comprising:
a fixing device comprising a heater (16H) configured to fix an output image onto an output sheet;
a monitoring device (15) configured to monitor and detect a trigger signal that triggers the apparatus to return from the power-saving mode to a normal operating mode; and
a power control device (11) configured to shut off the passage of electric current through the heater (16H) during a period of time between a detection of a trigger signal by the monitoring device (15) and a starting of an image outputting operation.

2. A facsimile apparatus having a power-saving mode in which the supply of electric power to devices in the apparatus is shut off and/or reduced when the apparatus has not been in operation for a predetermined period of time, the apparatus comprising:
a fixing device comprising a heater (16H) configured to fix an output image onto an output sheet;
a monitoring device (15) configured to monitor and detect a trigger signal that triggers the apparatus to return from the power-saving mode to a normal operating mode; and
a power control device (15) configured to be capable of performing different methods of controlling the power consumption of the heater (16H) during a period of time between a detection of a trigger signal by the monitoring device (15) and a starting of an image outputting operation,
wherein said power control device controls the power consumption of the heater (16H) in accordance with a selected one of the different methods.

3. The apparatus according to the claim 2, further comprising a memory (13) configured to store data; and
wherein the power control device (15) is capable of performing different plural methods of raising the temperature of the heater (16H) during a period between a detection of a trigger signal by the monitoring device (15) and a starting of an image outputting operation,
wherein said power control device raises the temperature of the heater (16H) in accordance with an available storage capacity of the memory.

4. The apparatus according to the claim 2 or 3, wherein the selected one of the different methods is specified by a user of the apparatus.

5. The apparatus according to claim 2 or 3, wherein the selected one of the different methods is invoked by the trigger signal.

6. A facsimile apparatus having a power-saving mode in which the supply of electric power to devices in the apparatus is shut off and/or reduced when the apparatus has not been in operation for a predetermined period of time, the apparatus comprising:
image fixing means comprising a heater (16H) for fixing an output image onto an output sheet;
monitoring means (15) for monitoring and detecting a trigger signal that triggers the apparatus to return from the power-saving mode to a normal operating mode; and
power control means (11) for shutting off the passage of electric current through the heater (16H) during a period of time between a detection of a trigger signal by the monitoring means (15) and a starting of an image outputting operation.

7. A facsimile apparatus having a power-saving mode in which the supply of electric power to devices in the apparatus is shut off and/or reduced when the apparatus has not been in operation for a predetermined period of time, the apparatus comprising:
image fixing means comprising a heater (16H) for fixing an output image onto an output sheet;
monitoring means (15) for monitoring and detecting a trigger signal that triggers the apparatus to return from the power-saving mode to a normal operating mode; and
power control means (15) capable of performing different methods of controlling the consumption power of the heater (16H) during a period of time between a detection of a trigger signal by the monitoring means (15) and a starting of an image outputting operation,
wherein said power control means controls the power consumption of the heater (16H) in accordance with selected one of the different methods.

8. A method for controlling a facsimile apparatus having a heater (16H), the method comprising:
shutting off the electric power to the heater when the apparatus has not been in operation for a predetermined period of time;
monitoring and detecting a trigger signal that triggers the apparatus to return from a power-saving mode to a normal operating mode;
shutting off the passage of electric current through the heater (16H) during a period of time between a detection of a trigger signal and a starting of an image outputting operation;
waiting for an image output request signal;
turning on the passage of electric current through the heater (16H) in accordance with the image output request signal; and
starting of an image outputting operation.

9. A method for controlling a facsimile apparatus having a heater (16H), the method comprising:
shutting off the electric power to the heater (16H) when the apparatus has not been in operation for a predetermined period of time;
monitoring and detecting a trigger signal that triggers the apparatus to return from a power-saving mode to a normal operating mode;
selecting one of plural states of the facsimile apparatus in accordance with a trigger signal;
bringing the facsimile apparatus into the selected state;
waiting for an image output request signal;
turning on the passage of electric current through the heater (16H) in accordance with the image output request signal; and
starting of an image outputting operation.

10. A method for controlling a facsimile apparatus having a heater (16H), the method comprising:
shutting off the electric power to the heater (16H) when the apparatus has not been in operation for a predetermined period of time;
monitoring and detecting a trigger signal that triggers the apparatus to return from a power-saving mode to a normal operating mode;
selecting one of plural states of the facsimile apparatus in accordance with a trigger signal;
bringing the facsimile apparatus into the selected state;
waiting for an image output request signal;
determining the available storage capacity of a memory (13);
turning on the passage of electric current through the heater (16H) in accordance with the image output request signal;
controlling the passage of electric current through the heater (16H) in accordance with the determined available capacity of the memory (13); and
starting of an image outputting operation.
